# DEMANDE DE BREVET EUROPEEN

(11) **EP 2 587 425 A1**
(43) Date de publication de la demande: **01.05.2013**
(21) Numéro de dépôt: 12190063.3
(22) Date de dépôt: 25.10.2012
(51) Int. Cl.: G06Q 10/08

(54) **Fourniture perfectionnée d'informations contextuelles**

(30) Priorité: 27.10.2011 FR 1159781
(71) Demandeur: France Télécom, 75015 Paris (FR)
(72) Inventeur: Chihani, Bachir, 14000 Caen (FR); Bertin, Emmanuel, 14530 Luc sur Mer (FR)
(74) Mandataire: Cabinet Plasseraud

(57) **Abrégé**

L'invention concerne la fourniture d'informations contextuelles à un terminal connecté à un réseau de communication, ces informations contextuelles étant relatives à des cibles susceptibles d'être présentes dans un environnement proche du terminal. En particulier:
- le terminal comporte des moyens de lecture sans contact (OPT),
- et l'environnement comporte au moins un dispositif (TAG) de fourniture d'informations d'identification associées à une cible, par lecture sans contact.

Le procédé comporte les étapes suivantes, mises en oeuvre auprès d'un serveur (10) apte à communiquer avec le terminal via ledit réseau de communication :
- collecter auprès d'un ou plusieurs serveurs secondaires (11, 12, 13, 14) des données d'informations contextuelles propres à une ou plusieurs cibles dudit environnement, et répertorier les données collectées selon des jeux de données, chaque jeu étant associé à une cible et auxdites informations d'identification de cette cible,
- suite à une coopération entre le terminal et le dispositif par lecture sans contact pour récupérer auprès du terminal lesdites informations d'identification, recevoir du terminal lesdites informations d'identification (ID),
- obtenir un jeu de données (IS) correspondant aux informations d'identification reçues, et
- communiquer au terminal les informations contextuelles du jeu de données obtenu.

## Description

La présente invention concerne la communication d'informations contextuelles pour des utilisateurs de terminaux, notamment en entreprise, afin d'acquérir de telles informations contextuelles sur les personnes et les objets qui les entourent, par exemple en situation de mobilité.

La plupart des techniques connues dans les réseaux sociaux en entreprise ont pour but de fournir un moteur de recherche d'experts. Ces techniques ont en commun une considération de liens sociaux directs entre les utilisateurs, mais la différence entre elles réside dans la nature de données sources collectées pour la création du réseau social. Pour créer les profils d'experts, certains demandent à l'utilisateur de remplir manuellement un profil et de le maintenir à jour. D'autres utilisent des informations publiques (par exemple un curriculum vitae accessible en ligne) ou se reposent sur les algorithmes de traitement de données ou « data mining » pour extraire des informations pertinentes depuis par exemples les courriers électroniques (ou « emails » ci-après).

A titre d'exemple, on connaît une application appelée « SmallBlue » de la société IBM® proposant des systèmes de localisateur d'experts et d'analyse de réseaux sociaux. Cette application extrait des informations depuis les archives d'emails des utilisateurs, ainsi que depuis les conversations de messageries instantanées sauvegardées, pour indexer ces informations relatives aux utilisateurs avec des mots-clés. Ces mots-clés permettent à d'autres personnes de trouver un utilisateur donné par recherche par mots-clés avec le moteur de recherche précité. L'application comporte notamment trois composants :
- l'outil « Ego » permettant de visualiser le réseau personnel de l'utilisateur,
- l'outil « Reach » permettant d'afficher le profil détaillé d'un expert,
- l'outil « Net » permettant d'afficher une présentation graphique du graphe social de l'entreprise, ainsi que la distance sociale (nombre de personnes) qui lie l'expert (la cible) avec l'utilisateur (la source).

Toutefois, l'application ne considère pas l'aspect dynamique des données extraites depuis les emails, car elle se fonde sur des archives d'emails qui peuvent être anciennes et peu fiables, au contraire de l'extraction directe et à la volée des données à partir d'emails dès leur réception.

De plus, cette application ne considère pas la proximité physique entre l'utilisateur et les personnes recherchées et ne fournit pas d'informations contextuelles.

La présente invention vient améliorer la situation.

Elle propose à cet effet un procédé de fourniture d'informations contextuelles à un terminal connecté à un réseau de communication, lesdites informations contextuelles étant relatives à des cibles (telles que par exemple des personnes physiques et/ou des entités informatiques) susceptibles d'être présentes dans un environnement proche du terminal (par exemple des locaux d'une entreprise). Le terminal comporte des moyens de lecture sans contact et l'environnement précité comporte au moins un dispositif de fourniture d'informations d'identification associées à une cible, par lecture sans contact.

Le procédé comporte en particulier les étapes suivantes, mises en oeuvre auprès d'un serveur apte à communiquer avec le terminal via ledit réseau de communication :
- collecter auprès d'un ou plusieurs serveurs secondaires des données d'informations contextuelles propres à une ou plusieurs cibles dudit environnement, et répertorier les données collectées selon des jeux de données, chaque jeu étant associé à une cible et auxdites informations d'identification de cette cible,
- suite à une coopération entre le terminal et le dispositif par lecture sans contact pour récupérer auprès du terminal lesdites informations d'identification, recevoir du terminal lesdites informations d'identification,
- obtenir un jeu de données correspondant aux informations d'identification reçues, et
- communiquer au terminal les informations contextuelles du jeu de données obtenu.

L'invention permet donc de proposer des profils d'experts sans avoir besoin d'une requête (avec mots-clés notamment) initiée par l'utilisateur. Elle permet d'associer la localisation physique d'une personne en entreprise avec sa localisation dans le réseau social de l'entreprise.

L'environnement comporte, dans une réalisation, une pluralité de dispositifs de fourniture d'informations d'identification (par exemple des étiquettes RFID, ou encore des tags à codes barres bidimensionnels), disposés dans des locaux respectifs de l'environnement.

Ces dispositifs de fourniture d'informations d'identification peuvent se présenter alors sous forme d'étiquettes disposées à proximité de portes de bureau respectives de locaux professionnels, dans une réalisation particulière.

Dans un mode de réalisation où la cible est une personne physique, les informations contextuelles comportent par exemple des informations relatives à la fonction de la personne dans un groupe social prédéterminé, et/ou à la charge de travail de la personne dans le groupe social, et/ou à la disponibilité de la personne, et/ou à la situation de la personne dans un réseau social relatif au groupe social.

Dans une réalisation, le serveur précité peut transmettre sur le réseau de communication une requête d'informations concernant une personne physique, respectivement à un ensemble de serveurs secondaires spécialisés en fonction d'un type d'informations.

Dans une telle réalisation, le serveur reçoit des serveurs secondaires ces données sous la forme de données publiées concernant la personne physique et collecte ces données en formant un jeu de données propre à la personne physique concernée.

Dans une réalisation avantageuse, l'un de ces serveurs secondaires au moins peut être adapté pour évaluer une charge de travail d'une personne physique donnée, en fonction d'informations relatives à l'utilisation par la personne d'un ensemble d'outils de communication électronique, incluant tout ou partie des outils de communication suivants :
- agenda électronique ;
- messagerie électronique ;
- messagerie instantanée ;
- téléphones mobiles et/ou fixes.

Avantageusement, le serveur, intermédiaire entre le terminal et les serveurs secondaires, peut établir, à partir des données publiées par les serveurs secondaires, un lien social entre des personnes d'une même société (une entreprise professionnelle, ou encore un réseau social ou un groupe social quelconque).

La présente invention vise aussi un système de fourniture d'informations contextuelles à un terminal connecté à un réseau de communication, ces informations contextuelles étant relatives à des cibles susceptibles d'être présentes dans un environnement proche du terminal. Dans ce système, le terminal comporte des moyens de lecture sans contact et l'environnement comporte au moins un dispositif de fourniture d'informations d'identification associées à une cible, par lecture sans contact. En particulier, le système comprend un serveur apte à communiquer avec le terminal via ledit réseau de communication et comportant des moyens pour :
- collecter auprès d'un ou plusieurs serveurs secondaires des données d'informations contextuelles propres à une ou plusieurs cibles dudit environnement, et répertorier les données collectées selon des jeux de données, chaque jeu étant associé à une cible et aux informations d'identification de cette cible,
- suite à une coopération entre le terminal et le dispositif par lecture sans contact pour récupérer auprès du terminal lesdites informations d'identification, recevoir du terminal lesdites informations d'identification,
- obtenir un jeu de données correspondant auxdites informations d'identification reçues, et
- communiquer au terminal les informations contextuelles du jeu de données obtenu.

L'invention vise aussi un terminal d'un système au sens de l'invention, comportant en particulier une application logicielle pour, lorsqu'elle est exécutée, recevoir lesdites informations d'identification de cible et les transmettre audit serveur sur le réseau, puis recevoir en conséquence du serveur un ensemble d'informations contextuelles concernant la cible.

L'invention vise aussi un serveur, comportant des moyens pour la mise en oeuvre du procédé ci-avant et en particulier une application logicielle pour, lorsqu'elle est exécutée :
- collecter auprès d'un ou plusieurs serveurs secondaires des données d'informations contextuelles propres à une ou plusieurs cibles dudit environnement, et répertorier les données collectées selon des jeux de données, chaque jeu étant associé à une cible et à un identifiant fonction des informations d'identification associées à cette cible,
- suite à une coopération entre le terminal et le dispositif par lecture sans contact pour récupérer auprès du terminal lesdites informations d'identification, interpréter des informations d'identification reçues du terminal et associer aux informations d'identification un jeu de données correspondant, et
- communiquer au terminal les informations contextuelles dudit jeu de données.

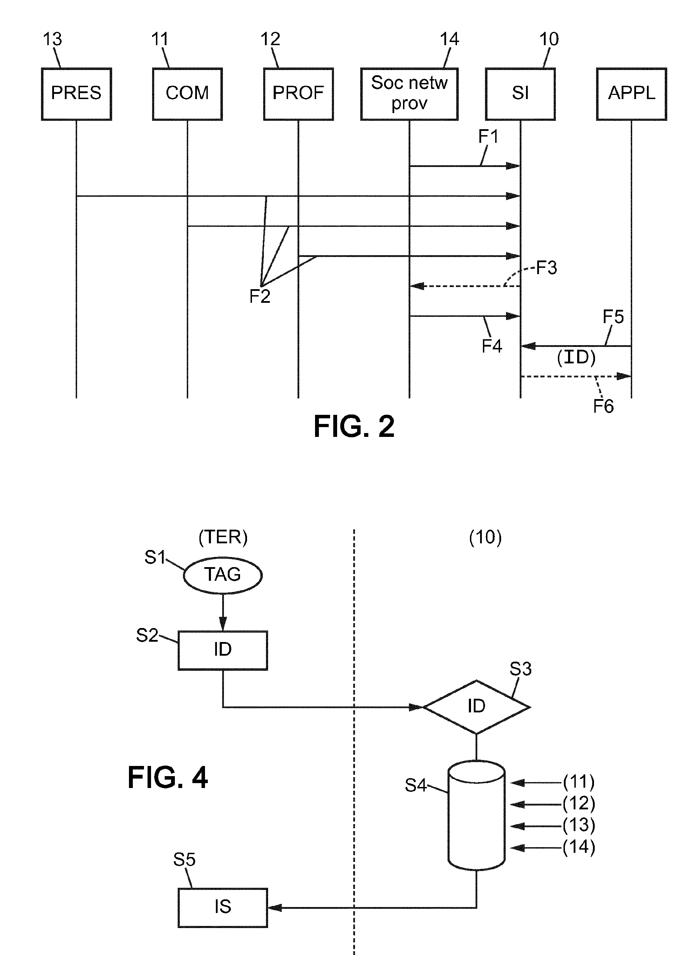

Plus généralement, l'invention vise aussi un programme informatique comportant des instructions pour la mise en oeuvre du procédé ci-avant, lorsque ce programme est exécuté par un processeur. Les instructions du programme informatique peuvent être distribuées entre le terminal et le serveur précités, lesquels échangent des données pour la mise en oeuvre du procédé au sens de l'invention, comme on le verra ci-après en référence à la figure 4. A ce titre, la figure 4 peut correspondre à un organigramme d'un algorithme général du programme informatique au sens de l'invention.

D'autres avantages et caractéristiques de l'invention apparaîtront à la lecture de la description ci-après et à l'examen des dessins annexés sur lesquels :
- la figure 1 illustre l'architecture globale d'un système pour la mise en oeuvre de l'invention,
- la figure 2 est un diagramme de séquences illustrant les échanges entre les différents équipements du système,
- les figures 3a à 3d représentent des exemples respectifs de copies d'écran du terminal pendant la mise en oeuvre du procédé au sens de l'invention,
- la figure 4 illustre les étapes principales d'un exemple de procédé au sens de l'invention.

L'invention permet de fournir à un utilisateur des informations contextuelles sur les objets ou les personnes physiquement proches de lui, améliorant ainsi le ressenti de sensibilisation sociale (ou « social awareness ») pour des personnes travaillant dans une même entreprise, sans qu'il soit déjà en contact avec ces personnes. Dans une réalisation particulière, des étiquettes ou « tags » (par exemple graphiques comme des codes barres, ou des représentations 2D, ou des tags électroniques pour une communication en champ proche « NFC ») sont placés sur des portes de bureaux d'une entreprise ou encore sur des objets d'intérêt (par exemple une imprimante, un ordinateur fixe). Dans la suite, une personne physique ou un tel objet est appelé « cible ». Les tags comportent des identifiants de ces cibles. Quand un utilisateur (appelé « source » dans la suite) lit le contenu du tag, avec un terminal muni de moyens de lecture de tags, comme par exemple un terminal mobile de type « smartphone », il reçoit des informations contextuelles sur les cibles.

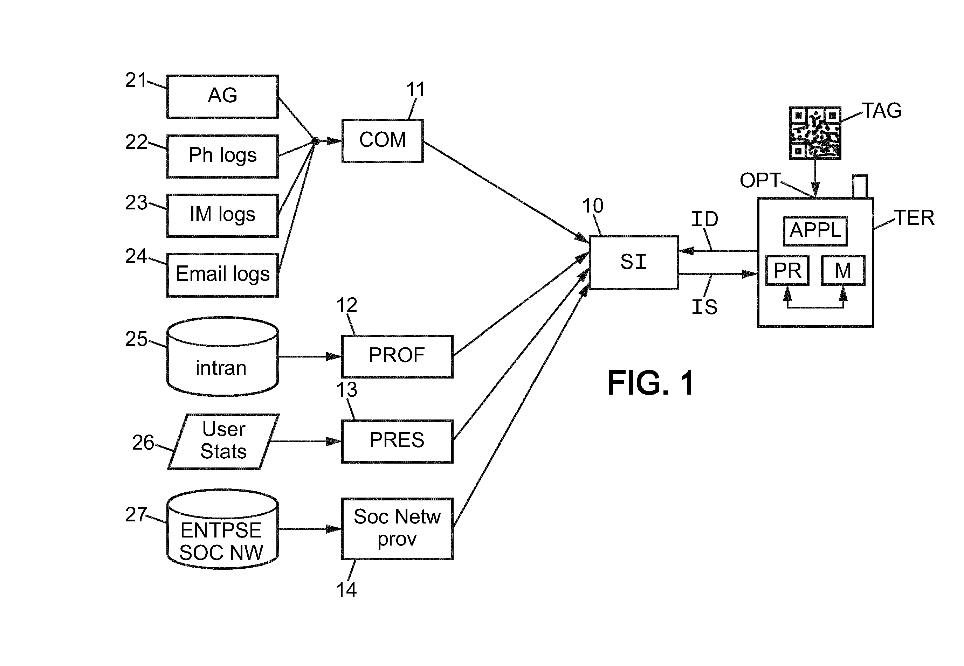

La figure 1 illustre l'architecture globale d'un système pour la mise en oeuvre de l'invention. L'application APPL installée sur le smartphone TER (comportant typiquement un processeur PR coopérant avec une mémoire de travail M), à disposition de l'utilisateur, comporte ici des moyens de lecture optique OPT pour lire un identifiant d'une cible, cet identifiant étant contenu dans le tag TAG. En variante d'une lecture optique d'un tag, on peut prévoir une lecture électromagnétique d'une étiquette RFID ou autre. Le tag (ou l'étiquette) est placé par exemple sur la porte de bureau de la cible à côté de son nom, dans le cas où la cible est une personne. L'application APPL envoie les informations d'identification ID à un serveur intermédiaire 10 de type dit « Broker » qui répond à la requête avec un ensemble d'informations sociales IS publiées par un ou plusieurs serveurs secondaires 11 à 14. Un serveur 14 par exemple de type « Social network provider » peut récupérer des données relatives à un réseau social d'entreprise depuis une base de données 27. Plus généralement, dans le cas de personnes, des informations concernant les cibles sont par exemple :
- leur statut de présence dont les données sont récupérées par le serveur secondaire 13 à partir d'un statut d'utilisateur tel que par exemple une connexion en cours à un service (présence sur un réseau social, ou sur messagerie instantanée, ou autres),
- des informations sur la charge de travail et/ou la disponibilité d'une personne identifiée à partir d'un ensemble d'outils de communication (par exemple la proportion d'appels téléphoniques rejetés relevés par le compteur 22, la proportion d'emails non lus 24 relevés par une application installée par exemple sur le poste informatique de la personne, le prochain créneau disponible dans l'agenda électronique de la personne 21, ou encore ses réponses à des messages transmis par messagerie instantanée 23), ces informations pouvant être collectées par un serveur secondaire dédié 11,
- des données de leur profil collectées par le serveur secondaire 12 auprès d'une base de données alimentant par exemple un site intranet 25 (par exemple des données sur le poste occupé dans l'entreprise, le département auquel est rattachée la personne, son expertise),
- et des données sur les chemins relationnels qui lient la source (utilisateur du terminal TER) à cette cible dans le graphe social de l'entreprise fourni par la base 27 et collectées par le serveur secondaire 14 : par exemple, si une personne A connaît une personne B qui connaît des personnes C et D, et que la personne E connaît les personnes C et D, alors les chemins entre A et E seront A-B-C-E et A-B-D-E.

Bien entendu, diverses données parmi ces catégories peuvent être recoupées pour fournir des informations pertinentes au terminal. Par exemple, pour être capable de publier les données de chemins relationnels, le serveur secondaire 14 (Social network provider) doit récupérer du serveur secondaire 12 (Profile provider) les informations de profil depuis la base de l'intranet entreprise 25. Par ailleurs, le serveur secondaire 11 (Communication provider) peut détecter depuis les extractions emails des liens entre personnes et construire un graphe social de l'entreprise basé sur les communications faites par ses membres. Par exemple, un critère peut consister en ce qu'un lien existe entre deux personnes s'ils ont déjà échangé des emails ou des conversations de messagerie instantanée ou des appels téléphoniques ou encore si l'un d'eux est présent dans le carnet d'adresses de l'autre.

La figure 2 est un exemple de diagramme de séquences illustrant les échanges entre les différents équipements du système et sur lequel :
- la flèche F1 illustre une souscription du serveur secondaire 14 (Social network provider) auprès du serveur intermédiaire 10 (broker) à des informations sur des ressources cibles par exemple d'une entreprise et telles que des employés (profil, expertise, disponibilité) ou encore du matériel (imprimante, ordinateur portable),
- les flèches F2 illustrent le fait que les différents serveurs secondaires fournisseurs (Presence provider, Communication provider et Profile Provider) publient des informations au serveur intermédiaire (Broker) dès que celles-ci sont disponibles,
- la flèche F3 illustre le fait que, quand le serveur intermédiaire (Broker) reçoit une nouvelle information auquel a été souscrit le serveur secondaire 14 (Social network provider), il la lui notifie pour une mise à jour,
- la flèche F4 illustre le fait que le serveur secondaire 14 (Social network provider) peut alors, dans une telle réalisation et suite à cette mise à jour du réseau social d'entreprise avec les informations reçues, publier une dernière version au serveur intermédiaire (Broker),
- la flèche F5 illustre le fait que l'application APPL installée sur le terminal de l'utilisateur lit le tag pour en extraire les informations d'identification ID des cibles et envoie ensuite une requête avec l'identifiant ID au serveur intermédiaire (Broker),
- la flèche F6 illustre le fait que, quand le serveur intermédiaire (Broker) reçoit la requête, il répond par des informations sociales.

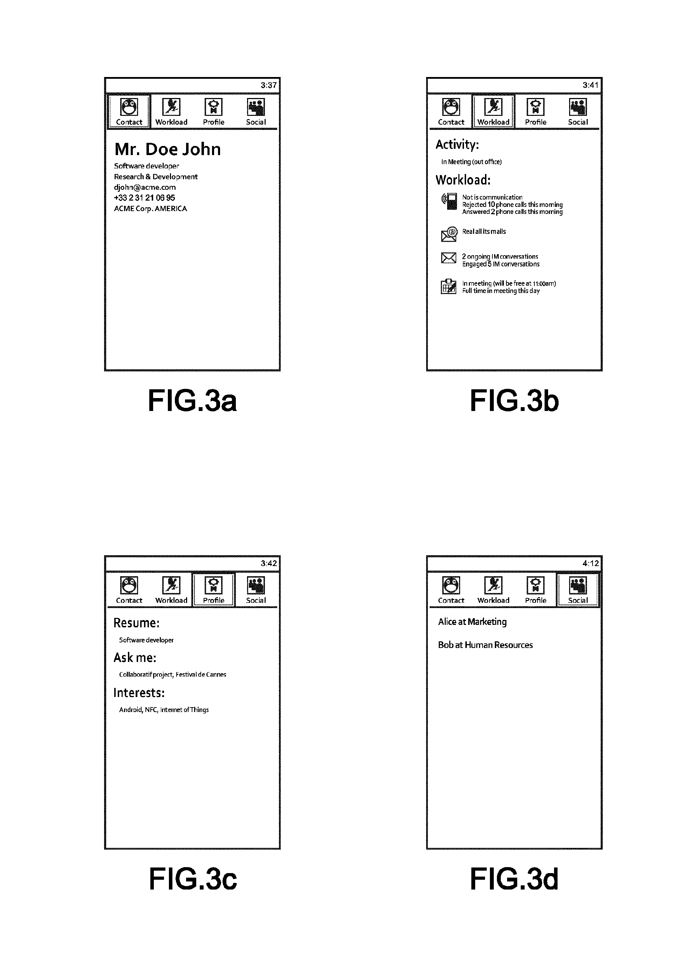

Les figures 3a à 3d présentent des exemples de copies d'écran d'une interface graphique associée à l'application APPL s'exécutant sur le terminal après réception de la réponse depuis le serveur intermédiaire (Broker). Sur la figure 3a, des informations générales sur la cible sont affichées. Ces informations peuvent être trouvées par exemple sur la page web de l'intranet entreprise correspondant à la cible. Sur la figure 3b, des informations sur la charge de travail de la cible déterminée selon différents outils de communication sont affichées. Ces informations sont générées par exemple après analyse des connexions (ou « logs ») à des services de communication, ou encore par exemple en identifiant une proportion de messages lus par rapport aux messages non lus. Sur la figure 3c, des informations de profil sont affichées, avec par exemple une brève présentation de la cible (par exemple ses intérêts professionnels). Sur la figure 3d, la liste des personnes (et leur entité d'appartenance) dans le(s) chemin(s) du graphe social de l'entreprise entre la cible et la source est affichée.

L'invention peut alors être utilisée par exemple dans le cadre d'une application mobile de réalité augmentée en entreprise. Elle permet d'augmenter le ressenti de l'environnent physique de l'utilisateur (par exemple les bureaux, les personnes, les imprimantes) en lui conférant un confort d'orientation. Il peut obtenir des informations sur les personnes travaillant dans l'entreprise, ou encore sur les caractéristiques d'une imprimante pour lancer une impression, ou autre. L'application de l'invention peut aussi être associée à un moteur de recherche d'experts, les requêtes d'utilisateurs étant par exemple sauvegardées et relancées ensuite instantanément quand l'application APPL est activée à nouveau afin de trouver des résultats plus récents qui correspondent à la recherche de l'utilisateur.

On a résumé sur la figure 4 les principales étapes d'un procédé mis en oeuvre, ici, par le terminal TER et le serveur intermédiaire 10. Ainsi, lors d'une première étape S1 de lecture du tag, le terminal récupère l'identifiant ID qu'il communique à l'étape S2 au serveur 10. A l'étape S3, le serveur 10 vérifie que l'identifiant ID correspond bien à un jeu de données d'informations sociales stocké en mémoire de sa base et récupère, le cas échéant, à l'étape S4 ce jeu de données IS qu'il communique au terminal TER à l'étape S5.

## Revendications

1. Procédé de fourniture d'informations contextuelles à un terminal connecté à un réseau de communication, lesdites informations contextuelles étant relatives à des cibles susceptibles d'être présentes dans un environnement proche du terminal,
**caractérisé en ce que** :
- le terminal comportant des moyens de lecture sans contact (OPT),
- ledit environnement comportant au moins un dispositif (TAG) de fourniture d'informations d'identification associées à une cible, par lecture sans contact, et
- lesdites cibles étant des personnes physiques,
le procédé comporte les étapes suivantes, mises en oeuvre auprès d'un serveur (10) apte à communiquer avec le terminal via ledit réseau de communication :
- collecter des données d'informations contextuelles, comportant des données relatives à un réseau social, et propres à une ou plusieurs cibles dudit environnement, et répertorier les données collectées selon au moins un jeu de données, chaque jeu étant associé à une cible et aux informations d'identification de cette cible ;
- suite à une coopération, par lecture sans contact, entre le terminal et un dit dispositif, pour fournir au terminal les informations d'identification d'une cible, recevoir du terminal lesdites informations d'identification (ID) ;
- obtenir un jeu de données (IS) correspondant auxdites informations d'identification (ID) reçues, et communiquer au terminal les informations contextuelles du jeu de données obtenu.

2. Procédé selon la revendication 1, **caractérisé en ce que** l'environnement comporte une pluralité de dispositifs de fourniture d'informations d'identification, disposés dans des locaux respectifs de l'environnement.

3. Procédé selon la revendication 2, **caractérisé en ce que** les dispositifs de fourniture d'informations d'identification sont des étiquettes disposées à proximité de portes de bureau respectives de locaux professionnels.

4. Procédé selon l'une des revendications précédentes, **caractérisé en ce que** les informations contextuelles comportent des informations relatives à la fonction de la personne dans un groupe social prédéterminé, et/ou à la charge de travail de la personne dans le groupe social, et/ou à la disponibilité de la personne, et/ou à la situation de la personne dans un réseau social relatif au groupe social.

5. Procédé selon la revendication 4, **caractérisé en ce que** lesdites données d'informations contextuelles sont collectées auprès d'un ensemble de serveurs secondaires (11, 12, 13, 14) spécialisés en fonction d'un type d'informations, ledit serveur (10) transmettant sur le réseau de communication une requête d'informations concernant une personne physique, respectivement audit ensemble de serveurs secondaires.

6. Procédé selon la revendication 5, **caractérisé en ce que** ledit serveur reçoit des serveurs secondaires des données publiées concernant la personne physique et collecte lesdites données en formant un jeu de données propre à ladite personne physique.

7. Procédé selon l'une des revendications 5 et 6, **caractérisé en ce qu'**un serveur secondaire au moins est adapté à évaluer une charge de travail d'une personne physique donnée, en fonction d'informations relatives à l'utilisation par la personne d'un ensemble d'outils de communication électronique, incluant tout ou partie des outils de communication suivants : agenda électronique ; messagerie électronique ; messagerie instantanée ; téléphones mobiles et/ou fixes.

8. Procédé selon l'une des revendications 6 à 7, **caractérisé en ce que** ledit serveur établit, à partir desdites données publiées, un lien social entre des personnes d'une même société.

9. Système de fourniture d'informations contextuelles à un terminal connecté à un réseau de communication, lesdites informations contextuelles étant relatives à des cibles susceptibles d'être présentes dans un environnement proche du terminal,
**caractérisé en ce que** :
- le terminal comportant des moyens de lecture sans contact (OPT),
- ledit environnement comportant au moins un dispositif (TAG) de fourniture d'informations d'identification associées à une cible, par lecture sans contact, et
- lesdites cibles étant des personnes physiques,
le système comprend un serveur (10) apte à communiquer avec le terminal via ledit réseau de communication et comportant des moyens pour :
- collecter des données d'informations contextuelles, comportant des données relatives à un réseau social, et propres à une ou plusieurs cibles dudit environnement, et répertorier les données collectées selon au moins un jeu de données, chaque jeu étant associé à une cible et aux informations d'identification de cette cible,
- suite à une coopération, par lecture sans contact, entre le terminal et un dit dispositif, pour fournir au terminal lesdites informations d'identification d'une cible, recevoir du terminal lesdites informations d'identification (ID),
- obtenir un jeu de données (IS) correspondant auxdites informations d'identification (ID) reçues, et
- communiquer au terminal les informations contextuelles du jeu de données obtenu.

10. Terminal d'un système selon la revendication 9, **caractérisé en ce qu'il** comporte une application logicielle pour, lorsqu'elle est exécutée, recevoir lesdites informations d'identification de cible et les transmettre audit serveur (10) sur le réseau, puis recevoir en conséquence du serveur un ensemble d'informations contextuelles concernant la cible.

11. Serveur, **caractérisé en ce qu'il** comporte des moyens pour la mise en oeuvre du procédé selon l'une des revendications 1 à 8, et une application logicielle pour, lorsqu'elle est exécutée :
- collecter des données d'informations contextuelles propres à une ou plusieurs cibles dudit environnement, et répertorier les données collectées selon au moins un jeu de données, chaque jeu étant associé à une cible et à un identifiant fonction des informations d'identification associées à cette cible,
- suite à une coopération, par lecture sans contact, entre un terminal et un dit dispositif, pour fournir au terminal des informations d'identification d'une cible, interpréter les informations d'identification (ID) reçues du terminal et associer aux informations d'identification un jeu de données (IS) correspondant, et
- communiquer au terminal les informations contextuelles du jeu de données (IS).

12. Programme informatique comportant des instructions pour la mise en oeuvre du procédé selon l'une des revendications 1 à 8, lorsque ce programme est exécuté par un processeur.
